# EUROPEAN PATENT APPLICATION

(11) **EP 3 816 791 A2**
(43) Date of publication of application: **05.05.2021**
(21) Application number: 21164062.8
(22) Date of filing: 22.03.2021
(51) Int. Cl.: G06F 8/20, G06F 8/35, G06F 9/445

(54) **APPLICATION CONSTRUCTION METHOD AND APPARATUS, ELECTRONIC DEVICE AND STORAGE MEDIUM**

(30) Priority: 16.06.2020 CN 202010549956
(71) Applicant: BEIJING BAIDU NETCOM SCIENCE AND TECHNOLOGY CO. LTD., 100085 Beijing (CN)
(72) Inventor: ZHOU, Kai, BEIJING, 100085 (CN); JU, Cheng, BEIJING, 100085 (CN); WANG, Qian, BEIJING, 100085 (CN)
(74) Representative: Wynne-Jones IP Limited

(57) **Abstract**

The application discloses an application construction method and apparatus, an electronic device and a storage medium, and relates to the field of artificial intelligence. According to the specific implementation, the method includes: acquiring a service orchestration file of an application; and determining an execution program of the application based on the service orchestration file, wherein the service orchestration file includes at least one of the following contents corresponding to at least one task obtained by disassembling the application: information relating to a format of data transferred between tasks; information relating to syntax transformation of the data transferred between the tasks; information relating to logical processing between the tasks; and information relating to a model that is to be used by the task.

## Description

### TECHNICAL FIELD

The present application relates to the technical field of computers, in particular to the field of artificial intelligence (AI).

### BACKGROUND

Service applications in an artificial intelligence system have various construction modes, which, ultimately, are mostly embodied as a plurality of independent services. In the process of constructing an artificial intelligence application, due to the fact that engineering implementation of the artificial intelligence application often does not conform to the existing big data programming paradigm, all tasks disassembled from the AI application are custom tasks, thus rendering the orchestration cost of the AI application remarkably high.

### SUMMARY

An application construction method and apparatus, an electronic device and a storage medium are provided according to embodiments of the application.

In a first aspect, an application construction method is provided according to an embodiment of the application, which includes:
acquiring a service orchestration file of an application; and
determining an execution program of the application based on the service orchestration file,
wherein the service orchestration file includes at least one of the following contents corresponding to at least one task obtained by disassembling the application: information relating to a format of data transferred between tasks; information relating to syntax transformation of the data transferred between the tasks; information relating to the logical processing between the tasks; and information relating to a model that is to be used by the tasks.

In a second aspect, an application construction apparatus is provided according to an embodiment of the application, which includes:
an information acquisition module configured for acquiring a service orchestration file of an application; and
a processing module configured for determining an execution program of the application based on the service orchestration file,
wherein the service orchestration file includes at least one of the following contents corresponding to at least one task obtained by disassembling the application: information relating to a format of data transferred between tasks; information relating to syntax transformation of the data transferred between the tasks; information relating to logical processing between the tasks; and information relating to a model that is to be used by the tasks.

In a third aspect, an electronic device is provided according to an embodiment of the application, which includes:
at least one processor, and
a memory communicatively connected to the at least one processor, wherein
the memory stores instructions executable by the at least one processor, wherein the instructions, when executed by the at least one processor, cause the at least one processor to perform the method described above.

In a fourth aspect, a non-transitory computer-readable storage medium storing computer instructions is provided according to an embodiment of the application, wherein the computer instructions, when executed by a computer, cause the computer to perform the method described above.

In the embodiments of the application, a plurality of tasks obtained by disassembling an application, a logic relationship between the tasks and data-related parameters thereof are defined through a service orchestration file, so that data processing of the tasks in the whole workflow can be kept compatible with each other. As long as the data-related parameters of the tasks and the logic relationship between the tasks are defined, an execution program of the application can be obtained, and an application developer does not need to pay attention to engineering implementation, thus the orchestration cost of the AI application is reduced, and the orchestration efficiency can be improved.

It should be understood that the content described in this part is not intended to identify the key or important features of embodiments of the present application, nor to limit the scope of the present application. Other features of the present application will become easy to be understood through the following description.

### BRIEF DESCRIPTION OF THE DRAWINGS

The appended drawings are intended to provide a better understanding of the application and constitute a part of the specification, which, in conjunction with the embodiments of the present application, are used to illustrate the specification and should not be construed as limiting the scope of present application. In the drawings:
FIG. 1 is a schematic flow chart of an application construction method according to an embodiment of the application;
FIG. 2 is a schematic diagram of a composition structure of an application construction apparatus according to an embodiment of the application; and
FIG. 3 is a schematic diagram of a composition structure of an electronic device for implementing an application construction method according to an embodiment of the application.

### DETAILED DESCRIPTION

The following, with reference to the accompanying drawings, illustrates the exemplary embodiments of the application, wherein various details of the embodiments of the application are included to help understanding, and the details are considered to be merely illustrative. Therefore, ordinary skilled people in the art should recognize that various changes and modifications can be made to the embodiments described herein without departing from the scope and spirit of the application. Similarly, for clarity and conciseness, descriptions of known functions and structures are omitted in the following description.

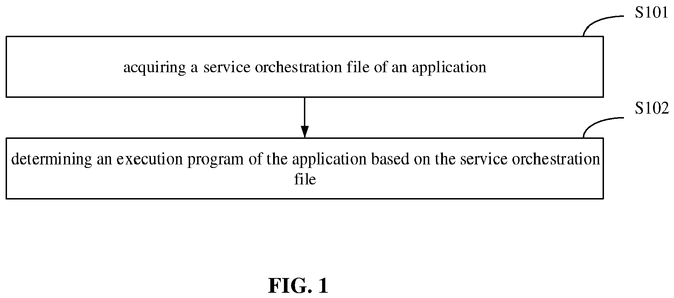

An application construction method is provided according to an embodiment of the present application. As shown in FIG. 1, the method includes:
S 101, acquiring a service orchestration file of an application; and
S102, determining an execution program of the application based on the service orchestration file,
wherein the service orchestration file includes at least one of the following contents corresponding to at least one task obtained by disassembling the application: information relating to a format of data transferred between tasks; information relating to syntax transformation of the data transferred between the tasks; information relating to logical processing between the tasks; and information relating to a model that is to be used by the tasks.

The service orchestration file in S101 in FIG. 1 is a file obtained based on service orchestration.

Service orchestration refers to a system for describing and executing a process, in which a service can be disassembled into a plurality of steps and carried out in sequence according to a certain rule in order to achieve a logical goal of the service. In the service orchestration, an abstraction of a single step is represented by a task, and a dependency relationship between upstream and downstream tasks is the most basic in various possible execution rules between the tasks, while an abstraction of the whole service can be represented by a workflow DAG (Direct Acyclic Graph) or a linear expression.

Because in AI application construction, a model is used as a core asset, engineering implementation of which often does not conform to the existing big data programming paradigm. Thus, all tasks disassembled from an AI applications are custom tasks, so that the benefit in an existing system is extremely low. Even if multiple applications have the same disassembly item, the multiple applications cannot share the result or reduce the orchestration cost. Moreover, the model assets of the AI application have high replicability and portability, and have relatively strong normal forms, such as the same model input and output or the same machine learning/deep learning framework.

Based on the above, the service orchestration file of the present application contains information relating to a model to be used by a task, wherein the related information may include a name and/or an identifier of the model.

In other words, a model to be used by a certain task of an application can be pointed out in a service orchestration file, but direct coding is not needed. In this way, the model can be directly used as an object of service orchestration, and the model is not coded anymore, so that the model reusability is improved, and the orchestration cost is reduced.

It is understood that only some of all tasks obtained by disassembling an application possibly require to use models. Accordingly, for some of the tasks requiring to directly taking the models as orchestration objects, information relating to the models, namely names or identifiers of the models and the like, may be described in a service orchestration file. For the orchestrated tasks, the corresponding numbers, such as indexes or identifiers, may be added in the service orchestration file, to represent which task corresponds to a certain content in the service orchestration file.

On the other hand, a service orchestration file in the embodiment of the application focuses on the flow control capability, and a definition of a calculation task may be hosted to other systems through an external expansion plug-in mechanism. According to the embodiment of the application, the generation of the service orchestration file by the service orchestration system, mainly relates to the following points: whether a data transfer mechanism of upstream and downstream tasks is provided or not; how an execution condition of a downstream task is determined based on the state and the result of an upstream task; and whether a built-in task is provided for program logic-like flow control (circulation and branching). Namely, the service orchestration file can keep data processing of the whole workflow compatible with each other by defining standard data formats between tasks and data deformation syntax.

The contents contained in a service orchestration file obtained in S101 of FIG. 1 are described as follows.

Information relating to a format of data transferred between tasks, includes at least one of the following:
a definition of an input data format of a task; and
a definition of an output data format of the task.

Information relating to standard data formats between tasks can be understood as follows: an input data format of each task is defined, and an output data format of each task is defined; and in a first task and a second task which have a dependency relationship with each other, the output data format of the first task is the same as the input data format of the second task, wherein the input of the second task depends on the output of the first task.

A data format of an input data format or an output data format may be set according to actual conditions, such as integer data, floating point data, character data, and the like, and of course, may also be set to other data formats according to actual conditions, which are not listed exhaustively in the example.

It is understood that there may be a dependency relationship between tasks in a plurality of tasks obtained by disassembling an application, for example, in the plurality of tasks obtained by disassembling, there may be a task that only has a next task but does not have a previous task, there may be a task that has a previous task but does not have a next task, and there may also be a task that has both a previous task and a next task.

In the embodiment of the application, any two tasks with a dependency relationship in a plurality of tasks may be understood as the first task and the second task described above.

For example, for a plurality of tasks 1, 2, 3, 4, 5, wherein the output of task 1 is taken as the input of task 2, then task 1 may be regarded as the first task and task 2 may be regarded as the second task.

In addition, the numbers of first tasks and second tasks are not limited, for example, a plurality of first tasks may correspond to one second task, or one first task may correspond to a plurality of second tasks.

For example, for a plurality of tasks 1, 2, 3, 4, 5, wherein the outputs of tasks 1, 2 are take as the inputs of task 3, then tasks 1, 2 may be regarded as the first tasks mentioned above, and task 3 may be regarded as the second task; the output of task 3 may be taken as the inputs of task 4, 5, then in this relation, task 3 may be regarded as the first task, and task 4, 5 may be regarded as the second task.

Furthermore, if a plurality of first tasks correspond to one second task, the output data formats of different first tasks may be the same definition; or certainly, the output data formats of different first tasks may be different, because the inputs of the second task can have formats of a plurality of data types. Or, if one first task corresponds to a plurality of second tasks, the output data of the first task can be set with different definitions corresponding to different second tasks. For example, the output of task 3 may be used as the inputs of tasks 4 and 5. If the task 4 requires to be input in a first data format and the task 5 requires to be input in a second data format, then the output data format transferred between the tasks 3 and 4 and the output data format transferred between the tasks 4 and 5 may be respectively defined to meet the requirements of different second tasks.

In the service orchestration file, information relating to syntax transformation of data transferred between tasks may include at least one of:
a definition of an adjustment to output data of a first task input to a second task; and
a definition of a preset parameter added to the output data of the first task input to the second task.

In other words, in a first task and a second task which have a dependency relationship between each other, output data of the first task is adjusted, and the adjusted data is used as input data of the second task; and/or in the first task and the second task which have the dependency relationship between each other, the output data of the first task is combined with a corresponding preset parameter to be used as the input data of the second task.

The description of the first task and the second task is the same of those described above, and is not repeated herein.

For example, assuming that task 1 and task 2 exist in a plurality of tasks obtained by disassembling an application, and that the input of the task 2 depends on the output of the task 1, the task 1 is the first task, and the task 2 is the second task.

The syntax transformation of data transferred between tasks in a service orchestration file (which may be a JSON file) may include a description of the following related information: assuming that task 1 defines in the JSON file that output data includes eight pieces of data, processing such as name change, data filtering or data transformation may be performed on the eight pieces of data to obtain the adjusted output data, and the adjusted output data may be taken as input data of task 2.

For example, syntax transformation of data transferred between tasks in a service orchestration file may include the following definition: assuming that task 1 defines in a JSON file that output data contains eight pieces of data, the eight pieces of data may be combined with a preset parameter to be used as input data of task 2. That is, the preset parameter may be added on the basis of the output data of task 1.

In one case, the numbers of first tasks and second tasks are not limited, for example, a plurality of first tasks may correspond to one second task, or one first task may correspond to a plurality of second tasks.

Furthermore, if a plurality of first tasks correspond to one second task, definitions of syntax transformation of output data of different first tasks may be the same, and therefore the input format of the second task is fixed; and of course, the definitions may be different, for example, a part of the output data of one first task may be deleted to obtain the deleted data, a preset parameter is added to the output data of another first task to obtain the corresponding data, and the transformed data of the two first tasks are provided to the second task. Or, if one first task corresponds to a plurality of second tasks, different definitions of the output data of the first task may be set for different second tasks. For example, the output of task 3 can serve as the inputs of tasks 4 and 5, for the data transferred between the tasks 3 and 4, a part of the output data of the task 3 may be filtered out and the remainder thereof may serve as the input data of the task 4; and for the data transferred between the tasks 3 and 5, the data added with a preset parameter may serve as the input data of the task 5.

In addition, a service orchestration file describes (or defines) common logical processing and programming paradigm in a standard way, and in particular, information relating to logical processing between tasks in the service orchestration file may include at least one of:
a preset condition required to be satisfied for executing a second task after a first task, the preset condition being related to a state and/or output data of the first task; and
a definition of at least one next task to be executed after the first task has obtained the output data.

That is to say, in a case where that the state and/or the output data of the first task satisfy the corresponding preset condition, the second task can be executed, and thus the preset condition needs to be defined in the service orchestration file.

In addition, at least one next task to be executed after the first task has obtained the output data is defined in the service orchestration file.

Definitions relating to execution logics between tasks may include task success, task failure, task waiting, declaration, single selection, and multiple parallelism.

The description of logical processing and programming paradigm may be understood as a conditional definition of processing between tasks. For example, for a first task and a second task that are dependent on each other, after the first task obtains output data, a determination logic is set for determining whether the output data is correct, and if so, the output data is used as input data of the second task; or, if not, the first task fails, and a loop logic may be set to re-execute the first task (or N tasks prior to the first task are re-executed, N being an integer greater than or equal to 1).

If, for example, a plurality of tasks may be processed in parallel, definition of parallel processing can be made, and if a first task has a dependency relationship with a second task and a third task, and the output of the first task may serve as the inputs of the second task and the third task, the output of the first task may be defined to be output to the second task and the third task in parallel, and the processing of the second task and the subsequent tasks thereof and the processing of the third task and the subsequent tasks thereof are triggered simultaneously. In the example, the second task and the subsequent tasks thereof may be understood as a series of tasks, the third task and the subsequent tasks thereof may be understood as another series of tasks, and the two series of tasks are processed in parallel.

If, for example, the input of one task depends on the outputs of two tasks, for example, the task 6 depends on the outputs of the tasks 3, 4, 5, a waiting processing logic may be added before the task 6, and the waiting logic may be defined as waiting for all the outputs of the tasks 3, 4, 5 to be obtained and then executing the task 6.

Definition (or related information) of logic processing and programming paradigm may not be limited to the above examples of course, and more logics may be set according to actual situations, while the present embodiment is not exhaustive.

In related technologies, computer logics may be stringed by writing code as a formalized definition of process control, such as if or loop. However, the embodiment of the application is explained by changing the formalized definition into a document description through a service orchestration file, such as a JSON or XML text, so that an application constructed based on the service orchestration file may be used in different systems. In addition, whether a complete workflow (e.g. DAG) description is supported does not influence the core target of the embodiment, since the DAG can always be executed according to topological sorting to keep logics and results correct; even if a linear design expression is adopted, the embodiment can be achieved, which is not limited in the embodiment.

An exemplary explanation to a service orchestration file in S 101 of the embodiment is provided based on one example. Assuming that the AI application is a face comparison application, the application may be divided into a plurality of tasks, and each task is defined through the service orchestration file, wherein the definition may include:
task 1 obtains two input pictures, and the two input pictures (assumed as picture a and picture b) are respectively distributed to task 2 and task 3;
tasks 2 and 3 are processed in parallel;
the input of task 2 is picture a, and the input of task 3 is picture b;
task 2 is the name or identifier number of a face recognition model, which is used for indicating that the task needs to call the face recognition model, to obtain a feature result fed back by the face recognition model; the output data format is defined for the feature result data; task 3 may be the same processing;
a waiting processing logic definition is added before task 4, wherein all output data of tasks 2 and 3 are waited to be obtained and then task 4 is processed; and the task 4 may call a comparison model to obtain contents such as a similarity result fed back by the comparison model;
data deformation processing for output data of task 4 is defined, and a preset parameter A added to output data of task 4 is defined;
output data of task 4 is used as input data of task 5, the task 5 is defined to judge according to a threshold value, to obtain a judgment result and output a feature comparison result of pictures a and b, and the output data format of the task 5 is defined to be a character type data format.

It is understood that the above description is only illustrative, and it may not be described in the above form in the actual processing, but may be described by a document in the JSON format or in the XML format, which is not limited herein. In addition, there may be more or less tasks in the actual processing, without limiting the AI application.

S102 is executed based on a service orchestration file, and execution code of an AI application may be generated based on the service orchestration file. Therefore, when the AI application is executed, it may be directly called.

In S102, the determining the execution program of the application based on the service orchestration file, includes at least one of:
determining a model corresponding to a task based on information relating to a model to be used by the task in the service orchestration file, and generating executable code of the task, i.e., due to the information (such as a name or an identifier) relating to the model to be used by the task already provided in the service orchestration file, when the execution program of the application is generated, generating the corresponding task directly based on the model;
determining executable code for adjusting or controlling the format of output data of a task based on information relating to the format of data transferred between tasks in the service orchestration file;
determining executable code for controlling or adjusting transformation of output data of tasks based on information relating to syntax transformation of data transferred between tasks in the service orchestration file; and
determining executable code for controlling an execution logic and/or an execution order of tasks based on information relating to logical processing between tasks in the service orchestration file.

In particular, in S102, the determining the execution program of the application based on the service orchestration file, includes at least one of:
determining an input data format of a task in the application based on the definition of the input data format of the task; and
determining an output data format of a task in the application based on the definition of the output data format of the task.

Executable code that may control an input data format or an output data format of at least one task is included in an application, to achieve the above defined contents.

The determining the execution program of the application based on the service orchestration file may also include at least one of:
adjusting the output data of the first task in the application based on the definition of the adjustment to the output data of the first task input to the second task, and taking the adjusted data as the input data of the second task; and
adding the preset parameter to the output data of the first task in the application to obtain the input data of the second task, based on the definition of the preset parameter added to the output data of the first task input to the second task.

When an execution program of an application is determined based on a service orchestration file, for example, corresponding executable code may be determined according to a definition in the service orchestration file, output data of a first task is adjusted through the executable code, and the adjusted data serves as input data of a second task; and the input data of the second task may be obtained by adding a preset parameter to the output data of the first task in the application through the executable code.

In S102, the determining the execution program of the application based on the service orchestration file, includes at least one of:
determining whether a state and/or an output data of the first task in the application satisfies the preset condition, based on the preset condition required to be satisfied for executing the second task after the first task, and determining whether to execute the second task based on a determination result; and
controlling at least one next task to be executed after completion of the first task in the application, based on a definition of the at least one next task to be executed after the first task has obtained the output data.

When determining an execution program of an application based on a service orchestration file, for example, corresponding executable code may be determined according to definitions in the service orchestration file, wherein the executable code is configured for at least one of: judging whether a state and/or output data of a first task in the application satisfies a preset condition, and determining whether to execute a second task based on a judgment result. For example, through a logic of the judgment performed by the executable code, if the result is that the preset condition is satisfied, the second task is controlled to be executed, otherwise, the first task is controlled to be re-executed, or the executable code is determined to re-execute another task according to the definitions in the service orchestration file, and the like.

At least one next task to be executed after completion of a first task in an application is controlled, that is, execution of the at least one next task in parallel after completion of execution of the first task may be controlled by executable code.

As can be seen, by using the above solutions, a plurality of tasks obtained by disassembling an application, a logical relationship between the tasks and data-related parameters may be defined through a service orchestration file, so that data processing of each task in the whole workflow can be kept compatible with each other. As long as the data-related parameters of the tasks and the logic relationship between the tasks are defined, an execution program of the application can be obtained, an application developer does not need to pay attention to engineering implementation, the orchestration cost of the AI application is reduced, and the orchestration efficiency can be improved.

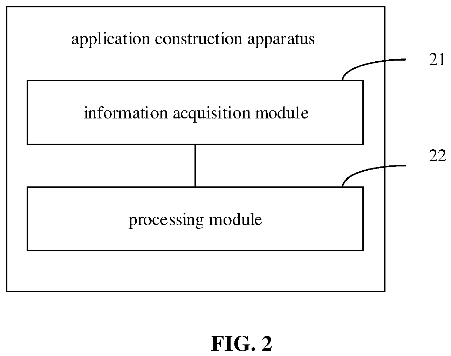

An application construction apparatus is provided according to an embodiment of the application. As shown in FIG. 2, the apparatus includes:
an information acquisition module 21 configured for acquiring a service orchestration file of an application; and
a processing module 22 configured for determining an execution program of the application based on the service orchestration file;
wherein the service orchestration file includes at least one of the following contents corresponding to at least one task obtained by disassembling the application: information relating to a format of data transferred between tasks; information relating to syntax transformation of the data transferred between the tasks; information relating to the logical processing between the tasks; and information relating to a model that is to be used by the tasks.

The information relating to the format of the data transferred between the tasks, includes at least one of:
a definition of an input data format of the task; and
a definition of an output data format of the task.

The processing module 22 is configured for at least one of:
determining the input data format of the task in the application based on the definition of the input data format of the task; and
determining the output data format of the task in the application based on the definition of the output data format of the task.

The information relating to the syntax transformation of the data transferred between the tasks, includes at least one of:
a definition of an adjustment to output data of a first task input to a second task; and
a definition of a preset parameter added to the output data of the first task input to the second task.

The processing module 22 is configured for at least one of:
adjusting the output data of the first task in the application based on the definition of the adjustment to the output data of the first task input to the second task, and taking the adjusted data as the input data of the second task; and
adding the preset parameters to the output data of the first task in the application to obtain the input data of the second task, based on the definition of the preset parameter added to the output data of the first task input to the second task.

The information relating to the logical processing between the tasks, includes at least one of:
a preset condition required to be satisfied for executing a second task after a first task, the preset condition being related to a state and/or output data of the first task; and
a definition of at least one next task to be executed after the first task has obtained the output data.

The processing module 22 is configured for at least one of:
determining whether the state and/or the output data of the first task in the application satisfies the preset condition, based on the preset condition required to be satisfied for executing the second task after the first task, and determining whether to execute the second task based on a determination result; and
controlling the at least one next task to be executed after completion of the first task in the application, based on the definition of the at least one next task to be executed after the first task has obtained the output data.

An electronic device and a readable storage medium are provided according to embodiments of the present application.

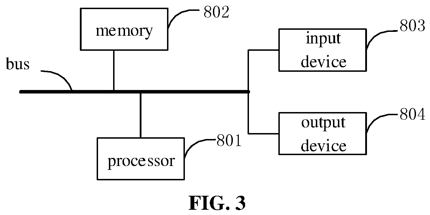

FIG. 3 shows a block diagram of an electronic device to which the application construction method according to an embodiment of the application is applied. The electronic device may be the aforementioned deployment device or proxy device. The electronic device is intended to represent various forms of digital computers, such as laptops, desktops, workstations, personal digital assistants, servers, blade servers, mainframes, and other suitable computers. The electronic device may also represent various forms of mobile devices, such as personal digital processing, cell phones, smart phones, wearable devices, and other similar computing devices. The components, their connections and relationships, and their functions shown herein are examples only, and are not intended to limit the implementations of the application described and/or claimed herein.

As shown in FIG. 3, the electronic device includes one or more processors 801, a memory 802, and interfaces for connecting the components, including a high-speed interface and a low-speed interface. The components are interconnected using different buses and may be mounted on a common motherboard or otherwise mounted as desired. The processors may process instructions executing within the electronic device, including instructions stored in memory or on memory to display graphical information of the GUI on an external input/output device such as a display device coupled to the interface. In other implementations, multiple processors and/or multiple buses may be used with multiple memories and multiple memories, if desired. Also, multiple electronic devices may be connected, with each device providing some of the necessary operations (e.g., as a server array, a set of blade servers, or a multi-processor system). One processor 801 is shown as an example in FIG. 3.

The memory 802 is a non-transitory computer-readable storage medium provided herein. The memory stores instructions executable by at least one processor to cause the at least one processor to perform an application construction method provided herein. The non-transitory computer-readable storage medium stores computer instructions for causing a computer to perform an application construction method provided herein.

The memory 802 is a non-transitory computer-readable storage medium storing non-transitory software programs, non-transitory computer-executable programs, and modules, such as program instructions/modules corresponding to the application construction method in the embodiments of the present application. The processor 801 implements the application construction method in the above-described method embodiments by executing the non-transitory software programs, instructions, and modules stored in the memory 802 to perform various functional applications and data processing of the server.

The memory 802 may include a storage area and a storage data area, wherein the storage area may store an operating system, applications required by at least one function, the storage data area may store data created from use of the electronic device, etc. further, the memory 802 may include high speed random access memory and may also include non-transitory memory, such as at least one disk storage device, flash memory device, or other non-transitory solid state storage device. In some embodiments, the memory 802 may optionally include memory located remotely from the processor 801, which may be connected to the electronic device via a network. Examples of such networks include, but are not limited to, the Internet, corporate intranets, local area networks, mobile communication networks, and combinations thereof.

The electronic device applying the application construction method may further include an input device 803 and an output device 804. The processor 801, the memory 802, the input device 803 and the output device 804 may be connected by bus or otherwise, for example by bus in FIG. 3.

The input device 803 may receive input numeric or character information and generate key signal inputs related to user settings and function control of the electronic device, such as a touch screen, keypad, mouse, trackpad, touchpad, pointing stick, one or more mouse buttons, trackball, joystick, etc. the output device 804 may include a display device, auxiliary lighting means (e.g., LEDs), haptic feedback means (e.g., vibration motors), etc. the display device may include, but is not limited to, a Liquid Crystal Display (LCD), a Light Emitting Diode (LED) display, and a plasma display. In some embodiments, the display device may be a touch screen.

Various implementations of the systems and techniques described herein may be implemented in digital electronic circuitry, integrated circuitry, application specific ASICs (application specific integrated circuits), computer hardware, firmware, software, and/or combinations thereof. These various implementations may include implementation in one or more computer programs that are executable and/or interpretable on a programmable system including at least one programmable processor, which may be a special or general purpose programmable processor, which may receive data and instructions from, and transmit data and instructions to, a storage system, at least one input device, and at least one output device.

These computer programs (also known as programs, software, software applications, or code) include machine instructions for a programmable processor, and may be implemented in a high-level procedural and/or object-oriented programming language, and/or in assembly/machine language. As used herein, the terms "machine-readable medium" and "computer-readable medium" refer to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

In order to provide for interaction with a user, the systems and techniques described herein may be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing system that includes a back-end component, e.g., as a data server, or that includes a middleware component, e.g., an application server, or that includes a front-end component, e.g., a user computer having a graphical user interface or a web browser through which a user can interact with an implementation of the systems and techniques described here, or any combination of such back-end, middleware, or front-end components. The components of the system can be interconnected by any form or medium of digital data communication, e.g., a communication network. Examples of communication networks include a Local Area Network (LAN), a Wide Area Network (WAN), and the Internet.

A computer system may include clients and servers. A client and server are generally remote from each other and typically interact through a communication network. The relationship of client and server arises by running computer programs on the respective computers and having a client-server relationship to each other. A server, which may be a cloud server, also known as a cloud computing server or cloud host, is a host product of the cloud computing service architecture to address the deficiencies of traditional physical host and VPS services with large administration difficulties and low business scalability.

It should be understood that the steps may be reordered, added, or deleted using the various forms of the processes shown above. For example, the steps described in this application may be performed in parallel or sequentially or in a different order, and are not limited herein so long as the desired results of the disclosed embodiments are achieved.

The above-described embodiments are not to be construed as limiting the scope of the present application. It will be apparent to those skilled in the art that various modifications, combinations, sub-combinations and substitutions may be made, depending upon design requirements and other factors. Any modifications, equivalents and improvements made within the spirit and principles of the present application are intended to be included within the scope of this application.

## Claims

1. An application construction method, comprising:
acquiring (S101) a service orchestration file of an application; and
determining (S102) an execution program of the application based on the service orchestration file,
wherein the service orchestration file comprises at least one of following contents corresponding to at least one task obtained by disassembling the application: information relating to a format of data transferred between tasks; information relating to syntax transformation of the data transferred between the tasks; information relating to logical processing between the tasks; and information relating to a model that is to be used by the task.

2. The method of claim 1, wherein the information relating to the format of the data transferred between the tasks comprises at least one of:
a definition of an input data format of the task; and
a definition of an output data format of the task,
preferably, the determining (S102) the execution program of the application based on the service orchestration file comprises at least one of:
determining the input data format of the task in the application based on the definition of the input data format of the task; and
determining the output data format of the task in the application based on the definition of the output data format of the task.

3. The method of claim 1 or 2, wherein the information relating to the syntax transformation of the data transferred between the tasks comprises at least one of:
a definition of an adjustment to output data of a first task input to a second task; and
a definition of a preset parameter added to the output data of the first task input to the second task.

4. The method of claim 3, wherein the determining (S 102) the execution program of the application based on the service orchestration file comprises at least one of:
adjusting the output data of the first task in the application based on the definition of the adjustment to the output data of the first task input to the second task, and taking the adjusted data as the input data of the second task; and
adding the preset parameter to the output data of the first task in the application to obtain the input data of the second task, based on the definition of the preset parameter added to the output data of the first task input to the second task.

5. The method of any one of claims 1-4, wherein the information relating to the logical processing between the tasks comprises at least one of:
a preset condition required to be satisfied for executing a second task after a first task, the preset condition being related to a state and/or output data of the first task; and
a definition of at least one next task to be executed after the first task has obtained the output data.

6. The method of claim 5, wherein the determining (S 102) the execution program of the application based on the service orchestration file comprises at least one of:
determining whether the state and/or the output data of the first task in the application satisfies the preset condition, based on the preset condition required to be satisfied for executing the second task after the first task, and determining whether to execute the second task based on a determination result; and
controlling the at least one next task to be executed after completion of the first task in the application, based on the definition of the at least one next task to be executed after the first task has obtained the output data.

7. An application construction apparatus, comprising:
an information acquisition module (21) configured for acquiring a service orchestration file of an application; and
a processing module (22) configured for determining an execution program of the application based on the service orchestration file,
wherein the service orchestration file comprises at least one of following contents corresponding to at least one task obtained by disassembling the application: information relating to a format of data transferred between tasks; information relating to syntax transformation of the data transferred between the tasks; information relating to logical processing between the tasks; and information relating to a model that is to be used by the task.

8. The apparatus of claim 7, wherein the information relating to the format of the data transferred between the tasks comprises at least one of:
a definition of an input data format of the task; and
a definition of an output data format of the task,
preferably, the processing module (22) is configured for at least one of:
determining the input data format of the task in the application based on the definition of the input data format of the task; and
determining the output data format of the task in the application based on the definition of the output data format of the task.

9. The apparatus of claim 7 or 8, wherein the information relating to the syntax transformation of the data transferred between the tasks comprises at least one of:
a definition of an adjustment to output data of a first task input to a second task; and
a definition of a preset parameter added to the output data of the first task input to the second task.

10. The apparatus of claim 9, wherein the processing module (22) is configured for at least one of:
adjusting the output data of the first task in the application based on the definition of the adjustment to the output data of the first task input to the second task, and taking the adjusted data as the input data of the second task; and
adding the preset parameter to the output data of the first task in the application to obtain the input data of the second task, based on the definition of the preset parameter added to the output data of the first task input to the second task.

11. The apparatus of any one of claims 7-10, wherein the information relating to the logical processing between the tasks comprises at least one of:
a preset condition required to be satisfied for executing a second task after a first task, the preset condition being related to a state and/or output data of the first task; and
a definition of at least one next task to be executed after the first task has obtained the output data.

12. The apparatus of claim 11, wherein the processing module (22) is configured for at least one of:
determining whether the state and/or the output data of the first task in the application satisfies the preset condition, based on the preset condition required to be satisfied for executing the second task after the first task, and determining whether to execute the second task based on a determination result; and
controlling the at least one next task to be executed after completion of the first task in the application, based on the definition of the at least one next task to be executed after the first task has obtained the output data.

13. An electronic device, comprising:
at least one processor (801), and
a memory (802) communicatively connected to the at least one processor (801), wherein
the memory (802) stores instructions executable by the at least one processor (801), wherein the instructions, when executed by the at least one processor (801), cause the at least one processor (801) to perform the method of any one of claims 1-6.

14. A non-transitory computer-readable storage medium storing computer instructions, wherein the computer instructions, when executed by a computer, cause the computer to perform the method of any one of claims 1-6.

15. A computer program product, comprising computer program instructions, the computer program instructions, when executed by a computer, cause the computer to perform the method according to any one of claims 1-6.
